(19) Europäisches Patentamt
European Patent Office
Office européen des brevets

(11) **EP 2 094 066 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(51) Int Cl.:
***H05B 41/392*** *(2006.01)*

(21) Anmeldenummer: **08019739.5**

(22) Anmeldetag: **12.11.2008**

(54) **Verfahren zur Lichtstromsteuerung von gedimmten Leuchtmitteln sowie Schaltungsanordnung dafür**

Method for controlling a beam of light from dimmed bulbs and switching arrangement for this

Procédé destiné à la commande de flux lumineux de moyens d'éclairage réglés et agencement de commutation correspondant

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.02.2008 DE 102008010250**

(43) Veröffentlichungstag der Anmeldung:
**26.08.2009 Patentblatt 2009/35**

(73) Patentinhaber: **Insta Elektro Gmbh**
**58509 Lüdenscheid (DE)**

(72) Erfinder:
• **Gertjegerdes, Stefan**
**26349 Jaderberg (DE)**
• **Schürmann, Udo**
**26389 Wilhelmshaven (DE)**
• **Burgholte, Alwin**
**26389 Wilhelmshaven (DE)**

(56) Entgegenhaltungen:
EP-A1- 1 135 007     WO-A2-2007/006851
DE-A1- 4 406 371     US-A1- 2005 275 354

## Beschreibung

Die Erfindung betrifft ein Verfahren zur Steuerung eines bezüglich seines abzugebenden Lichtstroms einstellbaren, an einen einen Halbleiterschalter aufweisenden Dimmer angeschlossenen Leuchtmittels. Ferner betrifft die Erfindung eine Schaltungsanordnung zum Steuern des Lichtstroms eines an einen einen Halbleiterschalter aufweisenden Dimmer angschlossenen Leuchtmittels.

Leuchtmittel, die an einen einen Halbleiterschalter aufweisenden Dimmer angeschlossen sind und bezüglich ihres Lichtstroms (Helligkeit pro Zeit über alle Lichtfrequenzen) durch den Dimmer einstellbar sind, unterliegen Lichtstromschwankungen (Flickern), wenn die Netzfrequenz von beispielsweise 50 Hz durch Störfrequenzen überlagert ist. Der Flickereffekt tritt dann auf, wenn der Netzspannungspegel mit zwischenharmonischen Frequenzen überlagert ist, die um einige Hertz von den harmonischen Oberschwingungsfrequenzen abweichen. Begründet liegt dieses in den dann entstehenden Schwebungserscheinung mit der Differenz zwischen einer harmonischen Oberschwingung und der zwischenharmonischen Frequenz. Ursache derartiger Störfrequenzen sind u. a. von den Netzbetreibern generierte Rundsteuersignale, mit denen bei Verbrauchern installierte Geräte angesteuert werden sollen. Das Rundsteuersignal wird der Netzfrequenz überlagert. Zwischenharmonische Frequenzen, die auf elektronische Dimmer dieselbe Wirkung haben wie Rundsteuersignale, werden u.a. auch durch Umrichter in das Netz eingespeist.

Elektronische Dimmer arbeiten in der Regel nach dem Phasenanschnittprinzip oder nach dem Phasenabschnittprinzip. Beim Phasenanschnittprinzip sperrt der Halbleiterschalter des Dimmers den Stromfluss zum Leuchtmittel zu Beginn einer jeden Sinushalbwelle. Erst nach Ablauf einer durch den Anwender einstellbaren Zeit (Dimmwert) wird der Halbleiterschalter im Dimmer durchgeschaltet und das oder die daran angeschlossenen Leuchtmittel werden bestromt. Mit dem auf das Einschalten folgenden Stromnulldurchgang wird der Stromfluss gelöscht und der Halbleiterschalter in seine Sperrstellung gebracht, wodurch das oder die daran angeschlossenen Leuchtmittel abgeschaltet werden. Dieses erfolgt in jeder Sinushalbwelle bei einer Netzfrequenz 50 Hz 100 Mal in der Sekunde. Durch Variieren der Verzögerungszeit ausgehend von einem Sinusnullpunkt (Nulldurchgang) bis zum Zünden des Halbleiterschalters lässt sich die Helligkeit des Leuchtmittels stufenlos einstellen. Im Unterschied hierzu werden das oder die Leuchtmittel bei einem Phasenabschnittdimmer im Nulldurchgang der Spannungs-Sinushalbwelle eingeschaltet und nach einer durch den Anwender einstellbaren Zeit durch entsprechendes Ansteuern des Halbleiterschalters wieder abgeschaltet. Auch bei diesen Dimmern kann durch Variieren des Abschaltzeitpunktes der Lichtstrom des angeschlossenen Leuchtmittels stufenlos eingestellt werden. Mit Hilfe der vorbeschriebenen Anschnitt- bzw. Abschnittsteuerung wird somit der Effektivwert der am Leuchtmittel anliegenden Spannung verändert.

Die Konzeption der Phasenan- und Phasenabschnittdimmer bedingt, dass im Prinzip die Netzspannung mit einer Rechteckfunktion der gleichen Grundfrequenz wie die Netzfrequenz multipliziert wird. Eine solche Rechteckfunktion besteht im Frequenzbereich aus der Grundschwingung und den ungradzahligen Oberschwingungen, die - wie vorbeschrieben - für den Flickereffekt verantwortlich sind. Da die Einschaltzeiten bzw. Einschaltimpulse für die Dimmerelektronik aus dem Integral über die halbe Periode der Netzspannung abgeleitet werden, wird bei Vorhandensein einer Störfrequenz der Zündimpuls entsprechend verschoben.

Während bei Dreidrahtdimmern (Dimmer mit Neutralleiteranschluss) eine Eliminierung des Flickern dadurch möglich ist, dass die Spannung an der Last erfasst werden kann, ist dieses bei Zweidrahtdimmern (Dimmer ohne Neutralleiteranschluss) nicht möglich, da Dimmer und Last in Reihe geschaltet sind. Zur Vermeidung bzw. zumindest zur Reduzierung eines Flickerns bei Zweidrahtdimmern sind unterschiedliche Vorschläge gemacht worden. In DE 44 41 733 A1 ist zu diesem Zweck beispielsweise ein Filterglied beschrieben, bestehend aus einem Siebglied, einem mehrstufigen Filter und einem Fensterdiskriminator, mit dem die Störeinflüsse im Netz negiert werden, und zwar durch geeignete Verschiebung des Schaltzeitpunktes. Nachteilig ist bei derartigen Schaltungsanordnungen, dass diese nur in demjenigen Frequenzbereich zufriedenstellend arbeiten, für den das oder die eingesetzten Filter ausgelegt sind. Die Bandbreite von Störfrequenzen nimmt allerdings zu, so dass Dimmer mit derartigen Flickereffekt-Korrekturmaßnahmen insbesondere in Bereichen, in denen Störfrequenzen in einem größerem Spektrum auftreten, nicht immer zufriedenstellend eingesetzt werden können.

Aus DE 44 06 371 B4 ist ein weiteres Verfahren zum Reduzieren des vorbeschriebenen Flickereffektes bekannt geworden. Bei dem in diesem Dokument beschriebenen Verfahren wird eine Energiebetrachtung über die Erfassung des Laststromes durchgeführt. Mit Hilfe einer geeigneten Quadrierschaltung werden die Einschaltzeiten eines Abschnittstellers vorgegeben.

Dem in diesem Dokument beschriebenen Verfahren liegt der Gedanke zugrunde, die Störanteile halbwellenbezogen zu unterdrücken. Außerdem wertet diese bei durchgeschaltetem Halbleiterschalter die Sinushalbwelle aus und passt im Hinblick auf das Vorhandensein von Störanteilen den Schaltzeitpunkt an. Dieses Verfahren kann allerdings nur bei einer Abschnittsteuerung realisiert werden. Auch können mit diesem Verfahren sich im Zuge der Frequenzüberlagerung einstellende längerperiodische Ereignisse nicht kompensiert werden.

Bei einem Verfahren gemäß EP 1 135 007 A1 wird zum Beispiel anstelle des tatsächlichen Zeitpunktes des Nulldurchganges ein mittels Korrekturfunktion errechneter virtueller Zeitpunkt verwendet. Dieses Verfahren ist aber sehr aufwendig.

Ausgehend von diesem diskutierten Stand der Technik liegt der Erfindung die Aufgabe zu Grunde, ein eingangs genanntes Verfahren sowie eine eingangs genannte Schaltungsanordnung dergestalt weiterzubilden, dass mit diesen ein besserer flickerfreier Dimmerbetrieb insbesondere auch bei einer Anschnittsteuerung möglich ist.

Gelöst wird die verfahrensbezogene Aufgabe durch ein eingangs genantes gattungsgemäßes Verfahren, bei dem die Spannung am Halbleiterschalter, wenn dieser den Stromfluss zum Leuchtmittel sperrt (Sperrspannung), als Regelgröße für die Lichtstromsteuerung verwendet wird, indem in Abhängigkeit von der Höhe der erfassten Sperrspannung und einem den abzugebenden Lichtstrom wiedergebenden Vergleichswert (SOLL-Wert) der Schaltzeitpunkt in Abhängigkeit von der Konzeption des Dimmers als Phasenanschnittdimmer oder Phasenabschnittdimmer zum Durchschalten des Halbleiterschalters zur Last oder zum Trennen des Halbleiterschalters von der Last generiert wird.

Die schaltungsanordnungsbezogene Aufgabe wird erfindungsgemäß durch eine eingangs genannte, gattungsgemäße Schaltungsanordnung gelöst, bei der die Schaltungsanordnung ein Erfassungs- und Bewertungsglied zum Erfassen und Bewerten der Sperrspannung am Halbleiterschalter aufweist, wobei der Ausgang des Erfassungs- und Bewertungsgliedes an den Eingang eines Reglers angeschlossen ist, welcher Regler einen weiteren Eingang aufweist, an dem ein SOLL-WERT für den Steuerwinkel zum Generieren eines Schaltzeitpunktes anliegt, und das Ausgangssignal des Reglers (Stellwert) an den Eingang eines Komparatorgliedes angeschlossen ist.

Bei diesem Verfahren - gleiches gilt für die Schaltungsanordnung - wird im Unterschied zu den Verfahren nach dem Stand der Technik eine Regelgröße verwendet, die erfasst und bewertet wird, bevor ein Schaltzeitpunkt zum Schalten des Halbleiterschalters generiert wird. Aus diesem Grunde können auch solche Korrekturen in die Zündzeitpunktbestimmung eingebracht werden, die die Folge längerperiodischer Störungen sind, d.h. Störungen, die mit geringer Frequenz und damit unterhalb der Netzfrequenz stattfinden. Hierzu macht man sich die vorbekannte Anschnitt- bzw. Abschnittsteuerung zunutze, die impliziert, dass bestimmte Abschnitte einer Sinushalbwelle das Leuchtmittel nicht beaufschlagen. Genutzt wird als Regelgröße die am Halbleiterschalter in seinem nicht durchgeschalteten Zustand anliegende Sperrspannung, die zu diesem Zweck als Signal vorzugsweise entsprechend aufbereitet wird. Je nach Konzeption des Dimmers als Phasenanschnittdimmer oder Phasenabschnittdimmer wird durch den Schaltzeitpunkt der Halbleiterschalter entweder zur Last durchgeschaltet (Phasenanschnittdimmer) oder von dieser getrennt (Phasenabschnittdimmer). Bei einem Phasenanschnittdimmer wird der Schaltzeitpunkt bestimmt, bevor der Halbleiterschalter durchgeschaltet ist, und zwar in einem Zeitpunkt, in dem das oder die Leuchtmittel nicht bestromt sind. Das Verfahren ist also prädiktiv arbeitend ausgelegt.

Dem beschriebenen Verfahren liegt die Erkenntnis zugrunde, dass die effektive Netzspannung als konstant angesehen werden kann, zumindest soweit dieses von Relevanz für das beschriebene Verfahren sowie für die beschriebene Schaltungsanordnung ist. Dieses bedeutet nicht, dass die effektive Netzspannung im physikalischen Sinne konstant ist, sondern dass Schwankungen derselben allenfalls zu Lichtstromschwankungen führt, welche aufgrund der Wahrnehmung und Bewertung im menschlichen Sehsinn nicht als Flickern wahrgenommen werden. Es ist nicht auszuschließen, dass bei Netzspannungsschwankungen, beispielsweise einer Netzspannungserhöhung eine gewisse länger andauernde Lichtstromerhöhung bewirkt wird. Derartige Änderungen werden nutzerseitig nicht oder zumindest nicht störend wahrgenommen, da diese über die gesamte Zeitdauer des Störsignales wiederum konstant bleibt.

Gemäß einer bevorzugten Ausgestaltung des Verfahrens wird die als Regelgröße eingesetzte, am Halbleiterschalter abgegriffene Sperrspannung zur Signalaufbereitung verstärkt, vorzugsweise geeignet potenziert etwa quadriert und geglättet, letzteres vorzugsweise über ein RC-Glied gemittelt, und anschließend einem Regler zugeführt. Als weitere Eingangsgröße ist der Regler mit einem SOLL-Wert beaufschlagt, welcher SOLL-Wert beispielsweise von einem Potenziometer geliefert wird und eine Regelgröße für die gewünschte Dimmung darstellt. Der Regler kann analog als Integrationsregler oder PI-Regler ausgebildet sein. Einen digital konzipierten Regler wird man als Zweipunktregler ausführen. Der Regler eines solchen Dimmers ist ausgelegt, dass der Schaltzeitpunkt des Halbleiterschalters dergestalt gebildet wird, dass die gemittelte quadrierte Sperrspannung konstant bleibt. Anstelle des Einsatzes eines Quadriergliedes zum Quadrieren der erfassten Sperrspannung kann auch eine Operationsverstärkerschaltung vorgesehen sein.

Nachfolgend ist die Erfindung anhand von Ausführungsbeispielen unter Bezugnahme auf die beigefügten Figuren beschrieben. Es zeigen:

**Fig. 1:** ein prinzipielles Blockschaltbild eines Phasenanschnittdimmers zur Lichtstromsteuerung eines an diesen angeschlossenen Leuchtmittels,

**Fig. 2:** die Reglerstruktur des Phasenanschnittdimmers der Figur 1,

**Fig. 3:** schematisierte Diagramme, darstellend die Spannungserfas- sung und -aufbereitung zum Generieren eines Stellwertes und

**Fig. 4:** ein Phasenanschnittdimmer zum Dimmen induktiver Lasten.

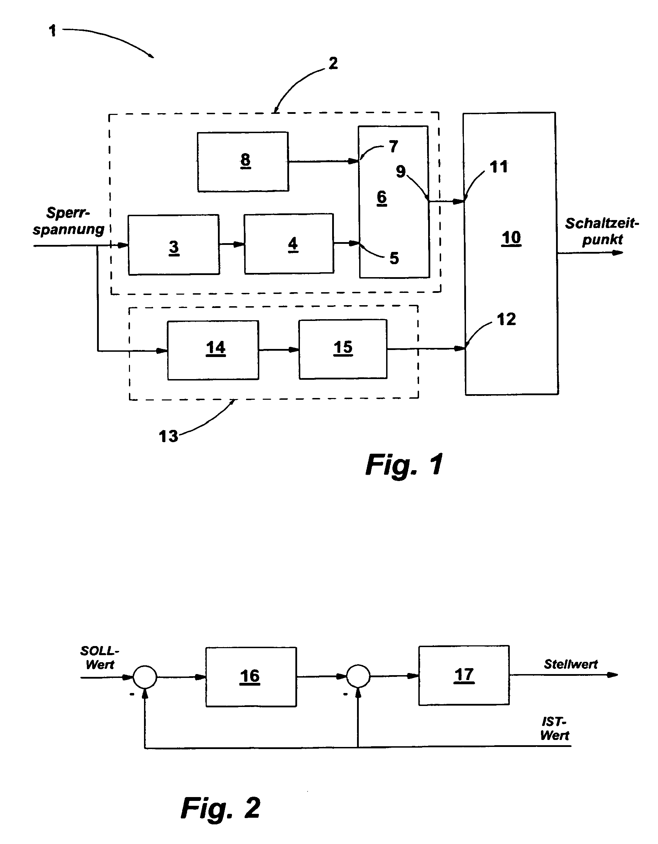

Ein Phasenanschnittdimmer 1 zum Dimmen eines Leuchtmittels, etwa einer Glühlampe verfügt über einen in dem Blockschaltbild der Figur 1 nicht näher dargestellten Halbleiterschalter, beispielsweise einen Triac. Bei dem Phasenanschnittdimmer 1 handelt es sich um einen Zweidrahtdimmer, bei dem das Leuchtmittel als Last und der Halbleiterschalter in Reihe geschaltet sind. Teil des Phasenanschnittdimmers 1 ist ein mit dem Bezugszeichen 2 gekennzeichnetes Erfassungs- und Bewertungsglied. Das Erfassungs- und Bewertungsglied 2 ist zum Erfassen der Sperrspannung des Halbleiterschalters an diesen angeschlossen. Erfasst wird mit dem Erfassungs- und Bewertungsglied 2 die am Halbleiterschalter in seiner Sperrstellung anliegende Spannung (Sperrspannung). Der Konzeption des Erfassungs- und Bewertungsgliedes 2 liegt die Erkenntnis zugrunde, dass die erfasste Sperrspannung am Halbleiterschalter das Abbild des Lichtstroms des Leuchtmittels als Funktion der Spannung an der Last ist. Diese Voraussetzung basiert auf der weiteren Erkenntnis, dass die Netzspannung auch während der Überlagerung von Störfrequenzen, beispielsweise durch Rundsteuersignale, als konstant angesehen werden kann, wie dieses nachfolgend kurz erläutert ist:

Ausgehend von einer konstanten Netzspannung und einem konstanten Störsignal kann nach Formel 1 die Aussage gemacht werden, dass die effektive Netzspannung während der Störung auch konstant ist.

$$P = \frac{U_{Last}^{2}}{R} \qquad\qquad (1)$$

Die gesamte Netzspannung teilt sich nach Formel 2 auf die Last und die Sperrspannung über dem Dimmer auf.

$$U_{eff(Netz(gesamt))} = \sqrt{U_{eff(Last)}^{2} + U_{eff(Sperr)}^{2}} \qquad\qquad (2)$$

Die Leistung eines Leuchtmittels und damit der Strom ergibt sich nach Formel 3.

$$P_{Last} = \frac{U_{eff(Last)}^{2}}{R} \qquad\qquad (3)$$

Daraus ergibt sich, dass durch Konstanthalten der Sperrspannung auch der Lichtstrom konstant gehalten werden kann.

In den vorstehend genannten Gleichungen ist $P$ die Leistung, $U$ die Spannung und $R$ der Innenwiderstand der Last ist.

Die Erfassung der Sperrspannung am Halbleiterschalter erfolgt bei dem dargestellten Ausführungsbeispiel über einen Spannungsteiler parallel zum Halbleiterschalter. Die erfasste Spannung wird in dem Erfassungs- und Bewertungsglied 2 geeignet potenziert. Bei dem dargestellten Ausführungsbeispiel erfolgt dieses mit einem Quadrierglied 3. Der Ausgang des Quadriergliedes 3 ist an den Eingang eines Mittelwertbildners 4 angeschlossen. Die am Halbleiterschalter erfasste und durch das Quadrierglied 3 und den Mittelwertbildner 4 aufbereitete Sperrspannung bildet am Ausgang des Mittelwertbildners 4 den IST-Wert. Dieser liegt an einem ersten Eingang 5 eines bei dem dargestellten Ausführungsbeispiel als zweischleifiger PI-Regler 6 (Proportional-Integrationsregler) an. Der Regler 6 verfügt über einen weiteren Eingang 7, an dem der von einem Potenziometer 8 gelieferte SOLL-Wert anliegt. Der Regler 6 ist konzipiert, um den IST-Wert konstant zu halten. Am Ausgang 9 des Reglers 6 ist ein Stellwert abgreifbar, der wiederum den Eingang eines Komparators 10 beaufschlagt. Der Komparator 10 generiert bei Vorliegen entsprechender Bedingungen einen Zündimpuls zum Durchschalten des Halbleiterschalters zum Bestromen des an diesen angeschlossenen Leuchtmittels.

Der Stellwert liegt am Komparator 10 an seinem Stellwerteingang 11 an. Der Komparator 10 verfügt über einen weiteren Sägezahnsignaleingang 12, an dem ein aus einem Sägezahnerzeugungsglied 13 erzeugtes Sägezahnsignal anliegt. Übersteigt der Pegel des Sägezahnsignals am Eingang 12 den Pegel des Stellwertes am Eingang 11, so generiert der Komparator 10 einen Zündimpuls zum Schalten des Halbleiterschalters. Der Sägezahngenerator 15 wird von dem Nulldurchgangs-Erkennungsglied 14 in jedem Nulldurchgang zurückgesetzt. Durch diese Anordnung wird der Bezug des Stellwertes des Erfassungs- und Bewertungsgliedes 2 in einen zeitlichen Zusammenhang mit dem Schaltzeitpunkt gebracht.

Bei dem Phasenanschnittdimmer 1 wird durch das Erfassungs- und Bewertungsglied 2 die am Halbleiterschalter in seiner Sperrstellung anliegende Sperrspannung als Regelgröße zum Steuern des Anschnittzeitpunktes eingesetzt. Grundsätzlich wird der Zeitpunkt des Anschnittes - also die Verzögerungszeit - von einem Benutzer des Systems über den SOLL-Wert vorgegeben. In Abhängigkeit von dem IST-Wert erfolgt über den Regler 6 eine Korrektur der Verzögerungszeit. Ist die Sperrspannung zu groß, bedeutet dieses aufgrund der vorstehenden dargelegten Zusammenhänge, dass die effektive Spannung kleiner ist als der durch den SOLL-Wert vorgegebene Lichtstrom. Zum Kompensieren der in einem solchen Fall der Last zugeführten zu geringen Spannung, wird die Verzögerungszeit reduziert, der Halbleiterschalter früher durchgeschaltet. Der Stellwert des Reglers wird also verkleinert, um der Last entsprechend mehr Energie zuzuführen. Gleiches gilt auch umgekehrt, wenn der IST-Wert zu klein ist. In einem solchen Fall wird der Stellwert vergrößert, mithin die Verzögerungszeit entsprechend verlängert. Die Spannung wird somit aktuell für jede Halbwelle in demjenigen Halbwellenanschnitt als Regelgröße genutzt, in dem der Halbleiterschalter nicht durchgeschaltet ist, um den Zündzeitpunkt zum Durchschalten des Halbleiterschalters zu bestimmen. Damit dient auch jeder Störanteil der anliegenden Netzspannung als Regelgröße.

Figur 2 zeigt die Reglerstruktur des Reglers 6. Der Regler 6 verfügt über zwei Regelschleifen, die in Kaskadenschaltung hintereinander geschaltet sind. Der Regler 6 umfasst einen ersten Regler 16, der bei dem dargestellten Ausführungsbeispiel als PI-Regler ausgebildet ist. Dieser dient zum Regeln eines äußeren Kreises, mit dem längerperiodische Störungen, etwa Schwebungen, die nicht in einer Halbwelle erkannt werden können, ausgeglichen werden. Auch die zweite Regelschleife verfügt über einen Regler 17, der bei dem dargestellten Ausführungsbeispiel ebenfalls als PI-Regler ausgebildet ist. Der Regler 17 regelt einen inneren Kreis, und zwar die zuvor beschriebene Halbwellen bezogene Regelung. Bei der in Figur 2 dargestellten Reglerstruktur liegt an dem Eingang des Reglers 17 ein um die längerperiodigen Störungen korrigierter SOLL-Wert an.

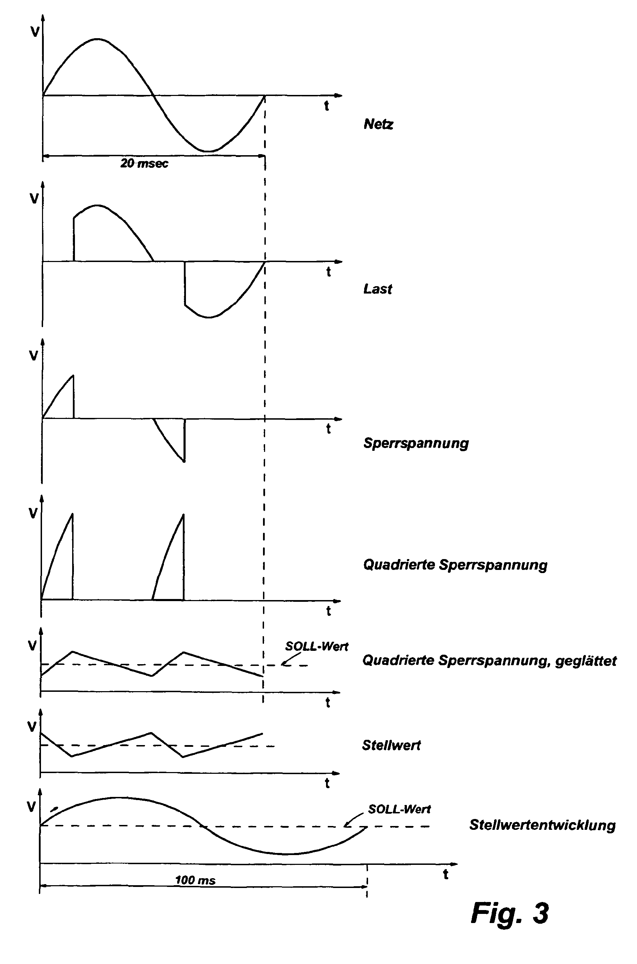

Figur 3 zeigt in Form von Diagrammen ausgehend von der Netzspannung (oberstes Diagramm) die Signalerfassung und die halbwellenbezogene Bewertung, wie diese durch den Regler 17 vorgenommen wird. Zu beachten ist, dass in dem in Figur 3 zu untersten wiedergegebenen Diagramm eine andere Skalierung der x- und y-Achse gewählt worden ist. Das in Figur 3 zuunterst wiedergegebene Diagramm zeigt schematisiert die Regelung des Reglers 16. In Abhängigkeit davon, ob über die längere Periode, die in diesem Diagramm beispielsweise mit 100 ms angenommen ist, das Änderungsverhalten der Sperrspannung positiv (steigend) oder negativ (fallend) ist, werden diese Störanteile der Sperrspannung korrigiert. Entsprechend der Abweichung der Sperrspannung, und zwar dahingehend, ob diese aktuell ansteigt oder abfällt, erfolgt eine Korrektur des SOLL-Wertes, welches korrigierte Signal dann am Eingang des Reglers 17 anlegt.

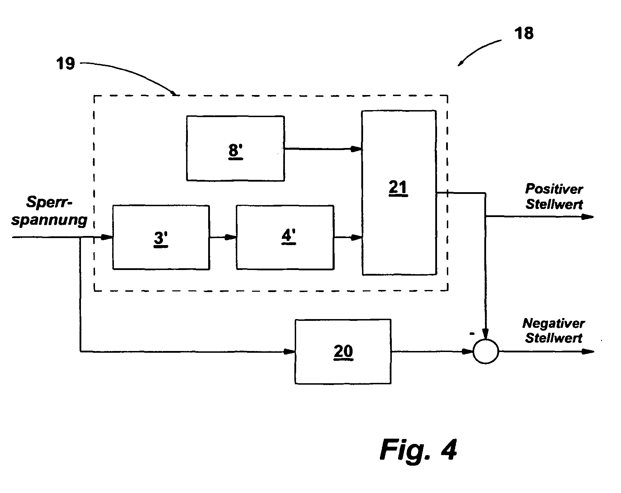

Figur 4 zeigt in einem schematisierten und vereinfachten Blockschaltbild einen Phasenanschnittdimmer 18 für induktive Lasten, beispielsweise für einen Betrieb von Niedervolt-Halogenlampen über einen Wechselstromtransformator. Bei derartigen Lasten führen bereits minimale Asymmetrien in den Netzspannung zu einer unsymmetrischen Ansteuerung der Halbwellen. Es bildet sich nach wenigen Perioden ein ausgeprägter Gleichanteil aus. Um diesen Effekt zu vermeiden, wird bei dem Ausführungsbeispiel der Figur 4 neben dem Erfassungs- und Bewertungsglied 19, welches konzipiert ist wie das Erfassungs- und Bewertungsglied 2 des Phasenanschnittdimmers 1 der Figur 1, ein weiterer Regler 20 eingesetzt, der als Integrationsregler einen Gleichanteil in der Aussteuerung erkennt und über seinen Ausgang die SOLL-Wert-Vorgaben für die positive und negative Halbwelle korrigiert. Die Bestandteile des Erfassungs- und Bewertungsgliedes 19 entsprechen denjenigen des Ausführungsbeispiels der Figur 1 und sind daher mit gleichen Bezugszeichen, ergänzt um ein "Apostroph", gekennzeichnet. In Figur 4 ist der Sägezahngenerator 13 aus Figur 1 nicht gezeigt. Ferner sind in Figur 4 nicht die Komparatoren gezeigt, welche den Zündimpuls bilden. Die Abgänge "positiver Stellwert" und "negativer Stellwert" werden wie der Stellwert aus Figur 1 behandelt. Es gibt also einen Stellwert für die positiven Halbwellen und einen Stellwert für die negativen Halbwellen. Der Regler 20 verschiebt den negativen Stellwert so gegenüber dem positiven, dass sich in der Sperrspannung und damit auch in der Spannung an der Last kein Gleichspannungsteil ausbildet. Die Reglerstruktur des Reglers 21 entspricht der in Figur 2 gezeigten.

In den vorbeschriebenen Ausführungsbeispielen wurde die Erfindung am Beispiel von Phasenanschnittdimmern erläutert. Gleichermaßen lässt sich dieses Prinzip auch bei Phasenabschnittdimmern einsetzen. Ein Blockschaltbild eines nach dem Prinzip der Abschnittsteuerung arbeitenden Dimmers unterscheidet sich von dem Blockschaltbild des Phasenanschnittdimmers der Figur 1 grundsätzlich nur dadurch, dass der Ausgang des Komparators den einen Eingang eines Flip-Flop beaufschlagt und der andere Eingang des Flip-Flop durch das Signal des Nulldurchgangs-Erkennungsgliedes beaufschlagt ist.

**Bezugszeichenliste**

1    Phasenanschnittdimmer
2    Erfassungs- und Bewertungsglied
3    Quadrierglied

| | |
|---|---|
| 4 | Mittelwertbildner |
| 5 | IST-Wert-Eingang |
| 6 | Regler |
| 7 | SOLL-Wert-Eingang |
| 8 | Potenziometer |
| 9 | Ausgang |
| 10 | Komparator |
| 11 | Stellwerteingang |
| 12 | Sägezahnsignaleingang |
| 13 | Sägezahnerzeugungsglied |
| 14 | Nulldurchgangs-Erkennungsglied |
| 15 | Sägezahngenerator |
| 16 | Regler |
| 17 | Regler |
| 18 | Phasenanschnittdimmer |
| 19 | Erfassungs- und Bewertungsglied |
| 20 | Regler |
| 21 | PI-Regler |

**Patentansprüche**

1. Verfahren zur Steuerung eines bezüglich seines abzugebenden Lichtstroms einstellbaren, an einen einen Halbleiterschalter aufweisenden Dimmer (1, 18) angeschlossenen Leuchtmittels, **dadurch gekennzeichnet, dass** die Spannung am Halbleiterschalter, wenn dieser den Stromfluss zum Leuchtmittel sperrt (Sperrspannung), als Regelgröße für die Lichtstromsteuerung verwendet wird, indem in Abhängigkeit von der Höhe der erfassten Sperrspannung und einem den abzugebenden Lichtstrom wiedergebenden Vergleichswert (SOLL-Wert) der Schaltzeitpunkt in Abhängigkeit von der Konzeption des Dimmers als Phasenanschnittdimmer oder Phasenabschnittdimmer zum Durchschalten des Halbleiterschalters zur Last oder zum Trennen des Halbleiterschalters von der Last generiert wird, wobei die Sperrspannung quadriert und geglättet wird, bevor das durch diese Schritte aufbereitete Sperrspannungssignal (IST-Wert) mit dem SOLL-Wert verglichen wird.

2. Verfahren nach Anspruch 1, **dadurch gekennzeichnet, dass** zum Glätten der quadrierten Sperrspannung eine Mittelwertbildung durchgeführt wird.

3. Verfahren nach Anspruch 1 oder 2, **dadurch gekennzeichnet, dass** der IST-Wert einem Regler zugeführt wird, der den Schaltzeitpunkt des Halbleiterschalters dergestalt beeinflusst, dass die ermittelte quadrierte Sperrspannung konstant bleibt.

4. Verfahren nach Anspruch 3, **dadurch gekennzeichnet, dass** dem halbwellenbezogenen IST-SOLL-Wert-Vergleich eine auf längerperiodische Störungen reagierende Regelung vorgeschaltet wird, damit als Eingangsgröße der halbwellenbezogenen Regelung ein bezüglich derartiger Störeinflüsse korrigierter SOLL-Wert verwendet wird.

5. Verfahren nach Anspruch 4, **dadurch gekennzeichnet, dass** zur Ermittlung längerperiodischer Störungen die Entwicklung des IST-Wertes beobachtet wird und erfasste Änderungen als Maß zur Korrektur des jeweils aktuellen IST-Wertes verwendet werden.

6. Schaltungsanordnung zum Steuern des Lichtstroms eines an einen einen Halbleiterschalter aufweisenden Dimmer (1, 18) angeschlossenen Leuchtmittels, **dadurch gekennzeichnet, dass** die Schaltungsanordnung ein Erfassungs- und Bewertungsglied (2, 19) zum Erfassen und Bewerten der Sperrspannung am Halbleiterschalter aufweist, wobei der Ausgang des Erfassungs- und Bewertungsgliedes (2, 19) an den Eingang (5) eines Reglers (6, 21) angeschlossen ist, welcher Regler (6, 21) einen weiteren Eingang (7) aufweist, an dem ein SOLL-Wert für den Steuerwinkel zum Generieren eines Schaltzeitpunktes anliegt, und das Ausgangssignal (Stellwert) des Reglers (6, 21) an den Eingang (11) eines Komparatorgliedes (10) angeschlossen ist, und dass das Erfassungs- und Bewertungsglied (2, 19) ein Quadrierglied (3, 3') sowie einen Mittelwertbildner (4, 4') umfasst.

7. Schaltungsanordnung nach Anspruch 6, **dadurch gekennzeichnet, dass** ein weiterer Eingang (12) des Komparators (10) durch ein Sägezahnsignal beaufschlagt ist, welcher Komparator (10) zum Beaufschlagen des Halbleiterschalters mit einem Schaltzeitpunkt an diesen angeschlossen ist.

8. Schaltungsanordnung nach einem der Ansprüche 6 oder 7, **dadurch gekennzeichnet, dass** der Regler ein zweischleifiger PI-Regler (6, 21) ist.

9. Schaltungsanordnung nach Anspruch 8, **dadurch gekennzeichnet, dass** der Regler (6) eine zweischleifige Reglerstruktur aufweist, wobei ein äußerer Regelkreis zum Kompensieren längerperiodischer Änderungen durch entsprechende Korrektur des SOLL-Wertes und ein von dem durch den äußeren Regelkreis generierten SOLL-Wert beaufschlagter innerer Regelkreis für den halbwellenbezogenen IST-SOLL-Wert-Vergleich vorgesehen ist.

10. Die Schaltungsanordnung nach einem der Ansprüche 7 bis 9, **dadurch gekennzeichnet, dass** das Rücksetzsignal durch ein Rücksetzsignal-Erzeugungsglied (13) bereitgestellt wird, das wiederum ein Nulldurchgangs-Erkennungsglied (14) sowie einen diesem nachgeschalteten Sägezahngenerator (15) aufweist.

## Claims

1. Process for controlling an illuminant connected to a dimmer (1, 18) which has a semiconductor switch and is adjustable in respect of its luminous flux, **characterised in that** the voltage at the semiconductor switch when the latter reverse biases the luminous flux to the illuminant (reverse voltage) is used as a control variable for regulating the luminous flux **in that**, depending on the height of the detected reverse voltage and on a reference value reflecting the luminous flux to be emitted (SET value), the switching instant for connecting the semiconductor switch to load or for disconnecting the semiconductor switch from the load is generated subject to the dimmer concept being a phase-fired dimmer or a trailing-edge dimmer, for which purpose the reverse voltage is squared and filtered before the reverse voltage signal (ACTUAL value) that has been conditioned by these steps is compared with the SET value.

2. Process in accordance with Claim 1, **characterised in that** averaging is conducted for the purpose of filtering the squared reverse voltage.

3. Process in accordance with Claim 1 or Claim 2, **characterised in that** the ACTUAL value is fed to a controller which influences the switching instant of the semiconductor switch in such a way that the determined squared reverse voltage remains constant.

4. Process in accordance with Claim 3, **characterised in that** a controller that responds to long-term disturbances is series-connected to the half-wave-related ACTUAL-SET value comparison so that a SET value that has been corrected in respect of such disturbances is utilised as the input variable of the half-wave-related controller.

5. Process in accordance with Claim 4, **characterised in that** in order to determine long-term disturbances, the development of the ACTUAL value is observed and any changes detected are utilised as the dimension for correcting the current ACTUAL value in each case.

6. Circuit arrangement for controlling the luminous flux of an illuminant connected to a dimmer (1, 18) that has a semiconductor switch, **characterised in that** the circuit arrangement has a detection and evaluation member (2, 19) for detecting and evaluating the reverse voltage at the semiconductor switch, with the output of the detection and evaluation member (2, 19) being connected to the input (5) of a controller (6, 21), said controller (6, 21) having a further input (7) to which a SET value for the delay angle for generating a switching instant is applied, and with the output signal (control value) of the controller (6, 21) being connected to the input (11) of a comparator member (10), and that the detection and evaluation member (2, 19) encompasses a squaring member (3, 3') and an averaging device (4, 4').

7. Circuit arrangement in accordance with Claim 6, **characterised in that** a saw-tooth signal is applied to a further input (12) of the comparator (10), said comparator (10) being connected to the semiconductor switch for the purpose of applying a switching instant to the same.

8. Circuit arrangement in accordance with Claim 6 or Claim 7, **characterised in that** the controller is a PI controller (6, 21) with two loops.

9. Circuit arrangement in accordance with Claim 8, **characterised in that** the controller (6) has a two-loop controller structure in which an outer control circuit is provided for compensating long-term changes by means of a corresponding correction of the SET value and an inner control circuit, to which the SET value generated by the outer control circuit is applied, is provided for the half-wave-related ACTUAL-SET value comparison.

10. The circuit arrangement in accordance with any of Claims 7 to 9, **characterised in that** the reset signal is provided by a reset signal generating member (13) which, in turn, has a zero-crossing recognition member (14) as well as a saw-tooth generator (15) which is series-connected to it.

**Revendications**

1. Procédé de commande d'une lampe réglable en matière de courant d'éclairage à délivrer, raccordée à un variateur de lumière (1, 18) comprenant un interrupteur à semi-conducteur **caractérisé en ce que** la tension à l'interrupteur à semi-conducteur, lorsque celui-ci bloque le flux électrique vers la lampe (tension de blocage), est utilisée comme variable commandée pour la commande de la lampe par le fait que, en fonction de l'amplitude de la tension de blocage enregistrée et d'une valeur de comparaison (valeur THEORIQUE) restituant le courant d'éclairage à délivrer, le moment de commutation est généré en fonction de la conception du variateur de lumière comme variateur à angle de phase ou variateur à commande de phase pour commuter l'interrupteur à semi-conducteur vers la charge ou vers la coupure de l'interrupteur à semi-conducteur de la charge, ce faisant la tension de blocage est élevée au carré et lissée avant que le signal de tension de blocage (valeur REELLE) généré par ces opérations soit comparé avec la valeur THEORIQUE.

2. Procédé selon la revendication 1, **caractérisé en ce qu'**un calcul de moyenne est effectué pour le lissage de la tension de blocage élevée au carré.

3. Procédé selon la revendication 1 ou 2, **caractérisé en ce que** la valeur REELLE est transmise à un régulateur qui influence le moment de commutation de l'interrupteur à semi-conducteur de telle sorte que la tension de blocage élevée au carré calculée reste constante.

4. Procédé selon la revendication 3, **caractérisé en ce qu'**une régulation réagissant à des parasites de longues périodes précède la comparaison valeur REELLE - valeur THEORIQUE se rapportant à la demi-onde afin qu'une valeur THEORIQUE corrigée en ce qui concerne de telles influences parasites soit utilisée comme grandeur d'entrée de la régulation se rapportant à la demi-onde.

5. Procédé selon la revendication 4, **caractérisé en ce que**, pour déterminer des parasites de longues périodes, l'évolution de la valeur REELLE est observée et les variations enregistrées sont utilisées comme échelle de correction de la valeur REELLE respectivement actuelle.

6. Disposition de circuit pour commander le d'éclairage d'une lampe raccordée à un variateur de lumière (1, 18) comprenant un interrupteur à semi-conducteur **caractérisée en ce que** la disposition de circuit comprend un organe d'enregistrement et un organe d'évaluation (2, 19) pour l'enregistrement et l'évaluation de la tension de blocage à l'interrupteur à semi-conducteur, ce faisant la sortie de l'organe d'enregistrement et d'évaluation (2, 19) est raccordée à l'entrée (5) d'un régulateur (6, 21), ce régulateur (6, 21) présentant une autre entrée (7) à laquelle est appliquée une valeur THEORIQUE pour l'angle de commande pour la génération d'un moment de commutation et le signal de sortie (valeur de réglage) du régulateur (6, 21) est raccordé à l'entrée (11) d'un organe comparateur (10) et **en ce que** l'organe d'enregistrement et d'évaluation (2, 19) englobe un organe d'élévation au carré (3, 3') ainsi qu'un organe de calcul de moyenne (4, 4').

7. Disposition de circuit selon la revendication 6 **caractérisée en ce qu'**une autre entrée (12) du comparateur (10) est alimentée par un signal en dent de scie, ce comparateur (10) étant raccordé à l'interrupteur pour alimenter l'interrupteur à semi-conducteur en moment de commutation.

8. Disposition de circuit selon l'une des revendications 6 ou 7 **caractérisée en ce que** le régulateur est un régulateur proportionnel et par intégration (6, 21) à câblage à paire double.

9. Disposition de circuit selon la revendication 8 **caractérisée en ce que** le régulateur (6) présente une structure de régulateur à câblage à paire double, ce faisant, un circuit de régulation externe est prévu pour compenser les variations de longues périodes par une correction adéquate de la valeur THEORIQUE ainsi qu'un circuit de régulation interne alimenté en valeur THEORIQUE généré par le circuit de régulation externe pour la comparaison valeur REELLE - valeur THEORIQUE se rapportant à la demi-onde.

10. La disposition de circuit selon la revendication 7 à 9 **caractérisée en ce que** le signal réinitialisation est fourni par un organe de génération de signal de réinitialisation (13) qui lui-même comprend un organe de détection de passage à zéro (14) ainsi que le générateur en dent de scie (15) monté après celui-ci.

**Fig. 1**

**Fig. 2**

Netz

Last

Sperrspannung

Quadrierte Sperrspannung

Quadrierte Sperrspannung, geglättet

Stellwert

Stellwertentwicklung

*Fig. 3*

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4441733 A1
- DE 4406371 B4

- EP 1135007 A1